# EUROPEAN PATENT APPLICATION

(11) **EP 4 400 397 A1**
(43) Date of publication of application: **17.07.2024**
(21) Application number: 23151256.7
(22) Date of filing: 12.01.2023
(51) Int. Cl.: B62K 7/02, B62K 19/10, B62K 19/24, B62K 19/34, B62M 6/55, B62K 13/08, B62K 15/00

(54) **CARGO BIKE FRAME**

(71) Applicant: Nihola, Cykler, 4060 Kirke Såby (DK)
(72) Inventor: Larsen, Niels Holme, 4060 Kirke Såby (DK)
(74) Representative: Holme Patent A/S

(57) **Abstract**

A cargo bike frame (1;1') comprises a front frame part (2,2a,2b,2c,2d) and a rear frame part (3;3'), wherein the front frame part (2,2a,2b,2c,2d) comprises a carrier frame part (4) arranged between a front fork part (5) and an intermediate frame part (6;6'). The intermediate frame part (6;6') and the rear frame part (3;3') are detachable mounted to each other, whereby the assembling part (14,14a,14b,14c,14d;14') of a front frame part (2,2a,2b,2c,2d) of a cargo bike frame (1;1') also is detachable securable to the assembling part (14,14a,14b,14c,14d,14') of a front frame part (2a,2b,2c,2d) of another cargo bike frame (1;1').

## Description

The present invention relates to a cargo bike frame comprising a front frame part and a rear frame part, wherein the front frame part comprises a carrier frame part arranged between a front fork part and an intermediate frame part of said front frame part.

A cargo bike wherein the front wheels are able to turn independently from the chassis is known from the applicant's earlier Danish patent no. DK173102B1. As for other conventional cargo bikes the cargo bike frame is constructed of pipes that are welded together by strong weldings, wherein a pipe end is welded to a pipe wall. The frame parts cannot be detached.

So conventional cargo bikes, such as carrier bicycles or carrier tricycles, are large, bulky and heavy structures, and due to dimensions and weight they are expensive to store and transport between production and sale.

It is a main aspect of the present invention to provide a bike frame that remedies the above-mentioned disadvantages, especially a cargo bike frame for a two-wheeled or threewheeled cargo bike.

In a further aspect of the present invention is provided a cargo bike frame that can be stored and transported in a compact state.

The novel and unique features whereby these and other advantages are achieved according to the present invention consists in that the intermediate frame part and the rear frame part are detachable mounted to each other.

According to the present invention the front frame part is composed of the front fork part, the carrier frame part, and the intermediate frame part in lengthwise extension of each other.

The front frame part is one separate first unit and the rear frame part is another separate second unit that when assembled together constitutes a strong cargo bike frame. Each of the first unit and the second unit can be transported and stored separately. The cargo bike frame of the present invention is thus of the split-part type, thereby providing a modular structured cargo bike frame.

Rear frame parts and front frame parts can be stored and transported as separate items, whereby not only the storage space and the transport space can be utilized much better than if the cargo bike frame is to be transported as one single welded together unit. Storage space can be utilized at its optimum, and storage costs and transport costs can thus be reduced substantially. By splitting the cargo bike frame in two separate frame parts the applicant has committed to a long term strategy of contributing to reducing the environmental carbon footprint by being able to place more frame parts at the same space and in the same volume as if said frame parts were stored and transported as a conventional, ready-to-use, welded together cargo bike frame, as the individual front frame part also can be turned in space and secured to one another.

A further huge advantage is the versatility of the cargo bike frame of the present invention provided by the many options of combining different front frame parts and rear frame parts. One kind of a rear frame part can be used with different kinds of front frame parts, and *vice versa,* thereby obtaining a modular cargo bike system.

The carrier frame part and the front fork part may e.g. be utilized in a cargo bike with the same steering system as the cargo bike described in the applicant's earlier Danish patent no. DK173102B1.

The rear frame part may comprise at least a seat tube, at least two opposite chain stays, at least two opposite seat stays, and one or more of a crank-axle bearing, a motor suspension member and an electric motor, which are situated at a lower end of the seat tube. The opposite chain stays and opposite seat stays provide suspension for a rear axle and thus the rear wheel. The rear frame part can, but need not, be prepared during transport to resellers with one or more of the saddle, crank, crank gear, chain, gearing, rear wheel, tires, etc. The seat tube then holds the seat post with the saddle. The motor suspension member can conveniently be arranged in extension of and protruding from the opposite chain stays below the seat tube.

Preferably the motor suspension member is configured as a U-bracket having its opening facing away from the seat tube. The U-bracket delimits a cavity for receiving and securing the electric motor.

The intermediate frame part may comprise
- a head tube,
- a top tube directed towards the rear frame part and having a top tube front end and an opposite top tube rear end,
- a down tube directed towards the rear frame part and having a down tube front end and an opposite down tube rear end, optionally the down tube has a first down tube section having the down tube front end and an opposite curved second down tube section having the down tube rear end, preferably the curved second down tube section is arranged closer to the top tube than the first down tube section,
wherein
- the top tube front end is secured to the head tube, and the opposite top tube rear end is secured to an assembling part, and
- the down tube front end is secured to the head tube, and the opposite down tube rear end is secured to the same assembling part.

The top tube front end may be secured to and extend from an upper part of the head tube, and the down tube front end may be secured to and extend from a lower part of the head tube.

It may be preferred that the down tube is composed of a first down tube section that extends into an opposite curved second down tube section arranged closer to the top tube than the first down tube section, thus above the first down tube section, to provide sufficient space above the ground for an electric motor below the head tube.

For most cargo bike frames top tubes and down tubes are pipes having circular cross-sections. In contrast thereto at least the top tube and the down tube can have substantially square or rectangular cross-sections, preferably with rounder corners, to increase contact area to head tube and assembling part, as well as providing an elegant look to the intermediate frame part.

The intermediate frame part is arranged in axial extension of the head tube, which head tube may be formed integrated with the carrier frame part by welding. The intermediate frame part advantageously serves to define a suitable distance between the carrier frame part and the rear frame part for a rider to operate a cargo bike utilizing the cargo bike frame of the present invention. Thus the intermediate frame part defines a convenient distance between the head tube and the seat tube for the rider to be able to reach the handlebars of a steerer tube inserted into the head tube to operate the steering system when the rider sits at the saddle on top of the seat tube. So the head tube accommodates the steerer tube, which is in operative connection with a front steering mechanism of the front wheels of the cargo bike.

In some embodiments of cargo bikes it is not preferred to also make the intermediate frame part and the carrier frame part detachable as well. One reason is that it disfigures the design of the cargo bike. Another reason is that a means for detachable securing the carrier frame part to the intermediate frame part would be difficult to access and monitor for maintenance, as such means would be more or less hidden by the cargo box, or free bolt ends would protrude towards the rider. Furthermore, the cargo frame part should be able to carry a substantially load and weight and a detachable joint can be structural vulnerable. By placing the joint between the rear frame part and the intermediate frame part the joint is visually exposed but not in the way for the rider. The joint between the assembling parts at a rear end of the cargo bike frame can be made very strong, is always visible, and is easily maintained.

In addition to the assembling part facilitating the detachable joining of the intermediate frame part to the rear frame part it also serves to keep a reliable strong structural joining of head tube, top tube and down tube at the rear end of the intermediate frame part, thereby keeping the top tube and down tube in a common axially central plane of the cargo bike frame, thereby avoiding torsional stresses along the length of the assembled cargo bike frame, in particular when finished into a cargo bike.

A particular elegant and expedient assembling of the intermediate frame part and the rear frame part can be obtained if the assembling part is detachably securable to the seat tube of the rear frame part.

The assembling part may in a preferred embodiment have an elongate flat abutment face for contacting the seat tube intimately in order to be detachable joined thereto.

In a particular preferred embodiment the assembling part is an elongate plate member.

In order to assemble the intermediate frame part and the rear frame part the assembling part may be configured with at least
- a first securing means,
- the seat tube may be configured with a second securing means that are alignable with the first securing means, and
- a third securing means configured for securing to the first securing means and to the second securing means.

Preferably the first securing means is one or more first through-going holes, the second securing means is one or more second through-going holes, and the third securing means is selected from one or more of bolts, nuts or screws, which bolts and screws may be dimensioned to pass into, optionally through, the one or more first through-going holes and the one or more second through-going holes.

The cargo frame part may thus e.g. adopt a bolt connection to structurally strengthen the joint between the assembling part and the seat tube. To that aspect the third securing means may be a bolt with a free end with an exterior screw thread end, and the nut have a co-operative interior screw thread for tight fastening together of the assembling part and the seat tube.

In order to obtain maximum contact area between the elongate flat abutment face of the assembling part and the seat tube, said seat tube may have an elongate flat bearing face facing said elongate flat abutment face of said assembling part. The elongate flat abutment face and the elongate flat bearing face can easily be arranged in mutual intimate contact so that the seat tube serves as a support face for the flat abutment face when assembling the front frame part and the rear frame part.

In contrast to a conventional seat tube, which has a circular cross-section, at least a central length of the seat tube of the cargo bike frame of the present invention may have a square or rectangular cross-section, which central length includes the elongate flat bearing face designed to abut the elongate flat abutment face. In such an embodiment the seat tube may simply be a square or rectangular pipe, wherein the bearing face is the side wall facing towards the front frame part. Optionally the bearing face may have a protruding seat for resting of a lower end of the assembling part, which protruding seat may absorb a load from the front end part, and facilitate orientation of the assembling part in relation to the seat tube when mounting the third securing means through the first securing means and the second securing means. Optionally the protruding seat is at least a part of the motor suspension member

Conventional chain stays and seat stays are pipes having circular cross-sections. In contrast thereto one or more of the opposite chain stays and the opposite seat stays of the rear frame part of the present invention can be made of sheet metal by bending and/or pressing into a desired profile.

A blank for a chain stay or a seat stay can e.g. be cut from sheet metal as an elongate strip of metal sheet, and the opposite free long sides of the metal strip be bend about 90° to the same side, whereby the metal strip is given a square C-profile or square U-profile. Two opposite chain stays may be mirror-shaped, and two opposite and seat stays may also be may be mirror-shaped, so when the opposite chain stays and the opposite and seat stays are assembled into the rear frame part their respective bend long sides face towards each other and their flat elegant exterior faces are exposed to the viewer.

The opposite chain stays may be arranged with their respective free rear chain stay ends more or less diverging from each other to provide space for the rear axle, and their respective converging opposite front chain stay ends be secured to the seat tube opposite the elongate flat bearing face. The opposite seat stays may also be arranged with respective free rear seat stay ends diverging from each other, and their respective opposite converging front seat stay ends be secured to the seat tube on the side of the seat tube opposite the elongate flat bearing face, and spaced from the front chain stay ends above said front chain stay ends.

A free rear chain stay end of a chain stay may converge towards a free rear seat stay end of a seat stay, and said ends merge into a rear bearing bracket for suspending the rear axle for a rear wheel.

Because the front frame part is detachable secured to the rear frame part, two front frame parts can be stored and transported coupled together at their respective assembling parts. So a front frame part of one cargo bike frame can not only be detachable secured to a rear frame part but also be detachable secured to the assembling part of a front frame part of another cargo bike frame, e.g. using the first securing means and the third securing means, or another or supplemental fourth securing means. It is emphasized that any suitable means may be used for the temporary joining of two front frame parts via their respective assembling parts, such as screw(s) and/or bolt(s) and/or strap(s). The front frame part is the largest and most voluminous part of the cargo bike frame, and because two front frame parts can be joined in the above described very simple manner, such joined front frame parts can be kept in joined upright position, with their longitudinal axis perpendicular to a support face, e.g. on a pallet, thereby utilizing the height of a storage and/or transport space much more efficiently, and thus optimizing packaging.

A further advantage is that one set of transport brackets can be used to support, store and/or transport two front frame parts at the same time, as will be described in further details below, which also saves costs. It should be understood that two front frame parts, each fully equipped and fitted with steering system, cargo box, front wheel etc., also can be joined together for transport in a similar manner as the non-equipped, non-fitted or partially fitted front frame part, simply by utilizing their respective assembling parts.

The invention further relates to a cargo bike comprising the cargo bike frame described above. The cargo bike may be a carrier bicycle or carrier tricycle. Preferably the cargo bike is power-assisted and comprises an electric motor and a chargeable battery.

The invention will now be described in further details with reference to the drawing in which
fig. 1 is a perspective side view of a first embodiment of a cargo bike frame in form of a carrier bicycle frame seen from the front frame part, and indicating the position of a front wheel and a rear wheel,
fig. 2 is an exploded view of the cargo bike frame seen in fig. 1 but without the wheels,
fig. 3 shows the same seen from the rear frame part,
fig. 4 is a perspective view of four front frame parts of the first embodiment of a cargo bike joined in upright adjacent sets of two utilizing their respective assembling parts and mounted on a pallet by means of transport brackets,
fig. 5 is a side view of the same without the transport brackets,
fig. 6 is an end view of the same without the transport brackets,
fig. 7 is a top view of the same without the transport brackets, and
fig. 8 is an exploded perspective side view of a second embodiment of a cargo bike frame in form of a carrier bicycle frame for an electric bike, and seen from the front frame part.

The design of a cargo bike frame seen in the drawing is intended for use in a carrier bicycle. It is however emphasized that within the scope of the present invention the structural design of the cargo bike frame can be different, and the cargo bike be e.g. a carrier tricycle. Preferably the cargo bike is power-assisted and comprises an electric motor and a chargeable battery. In respect of the drawing it should be understood that despite the functional means, such as handlebars, saddle, chain drive, gear, brakes, hubs, etc. of the cargo bike are not shown, such means are part of the cargo bike, and such means are well known to the skilled person.

The cargo bike frame of a cargo bike is the chassis that holds the cargo box, drive system, wheels, etc.

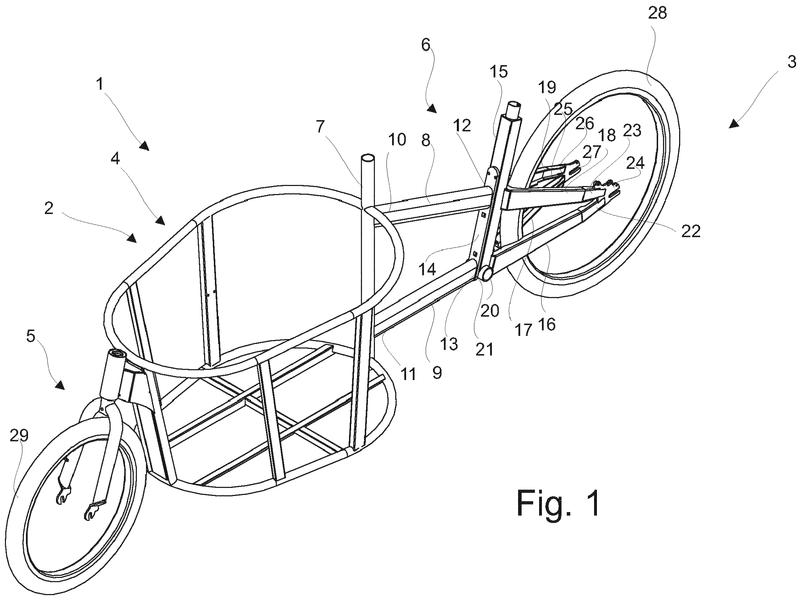

The first embodiment of a cargo bike frame seen in fig. 1 comprises a front frame part 2 and a rear frame part 3. The front frame part 2 comprises a carrier frame part 4 arranged between a front fork part 5 and an intermediate frame part 6, which intermediate frame part 6 is designed for detachable securing to the rear frame part 3. The front fork part 5 is welded to the carrier frame part 4.

An upright head tube 7 is the part of the intermediate part 6, which is secured to the carrier frame part 4 opposite the front fork part 5 in the longitudinal central plane of the cargo bike frame 1. The carrier frame part 4 is made up of pipes welded together into a basket-shaped grid structure designed to accommodate a cargo box.

The intermediate frame part 6 further comprises a top tube 8 and a down tube 9 that both are configured as flat pipes having a substantially rectangular cross-section with rounder corners, whereby the respective top tube front end 10 and down tube front end 11 have a large securing area for securing to the head tube 7. Similarly, the top tube rear end 12 and down tube rear end 13 expose a large securing area for securing to an assembling part 14.

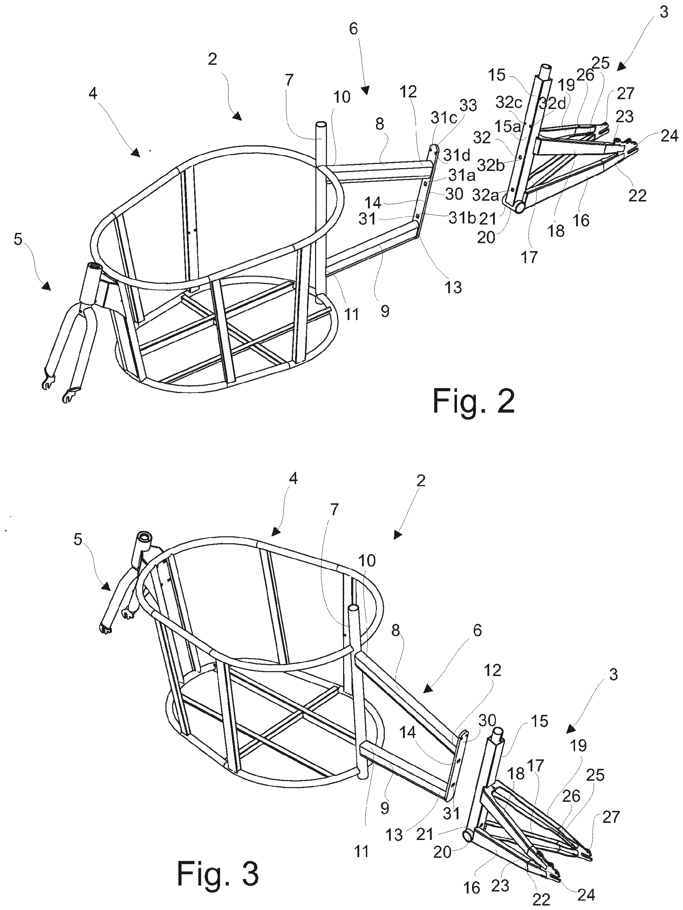

The rear frame part 3 comprises a seat tube 15, opposite chain stays 16,17, and opposite seat stays 18,19. The free rear chain stay end 22 of the chain stay 16 converges towards a free rear seat stay end 23 of the seat stay 18, which free ends 22,23 merge into a common rear bearing bracket 24. The free rear chain stay end 25 of the opposite chain stay 17 converges towards a free rear seat stay end 26 of the seat stay 19, which free ends 25,26 merge into a common rear bearing bracket 27. The rear frame part 3 further includes a crank-axle bearing 20 at a lower end 21 of the seat tube 15, as seen best in the exploded views of figs. 2 and 3.

The rear wheel 28 is suspended between the opposite rear bearing brackets 24,27 by means of a rear axle (not shown), and the front wheel 29 is suspended to a front axle (not shown) of the front fork 5.

The assembling part 14 is an elongate plate member that has an elongate flat abutment face 30 in contact with a flat bearing face 15a of the seat tube 15. The assembling part 14 has first through-going holes 31 as a first securing means, and the seat tube 15, which has a square cross-section, has second through-going holes 32 as a second securing means that can be aligned with the first securing means to receive a third securing means, such as bolts (not shown) that extends through both the first through-going holes 31 and the second through-going holes 32 so that a nut (not shown) can be secured to a free end of the bolt, preferably between the opposite chain stays 16,17 and opposite seat stays 18,19.

In the present embodiment the assembling part 14 has two lower first through-going holes 31a,31b provided between the top tube rear end 12 and down tube rear end 13, and two upper first through-going holes 31c,31d provided in a free end 33 of the assembling part 14 above the top tube 8. To co-operate in alignment with said through-going holes 31a,31b,31c,31d the seat tube 15 has lower second through going holes 31a,32b and upper second through going holes 32c,32d.

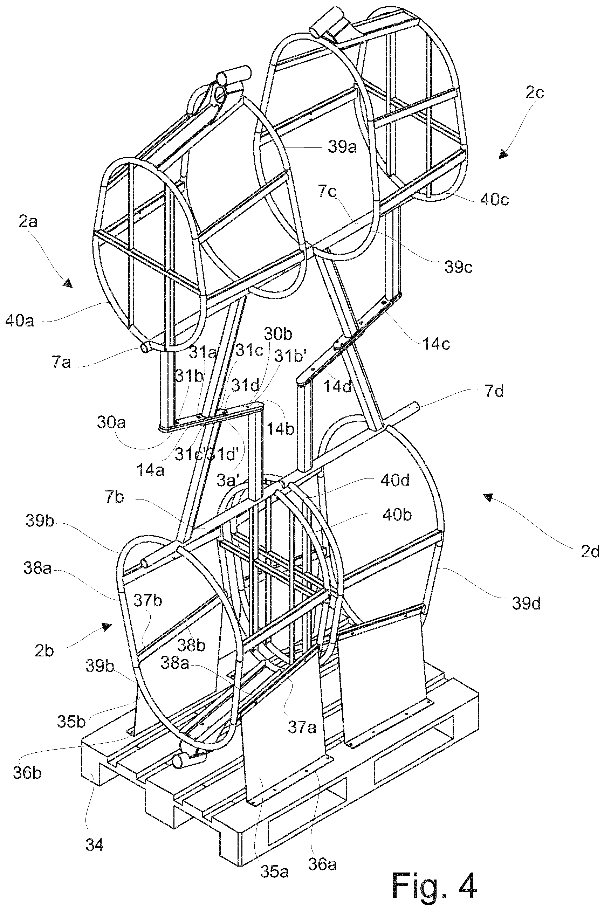

Fig. 4 shows four front frame parts 2a,2b,2c,2d mounted on a single pallet 34. Below only the joining of the front frame parts 2a,2b are described in details and referred to by reference numerals. The joining of the front frame parts 2c,2d corresponds to the joining of the front frame parts 2a,2b and will not be described in further details.

With references to the orientation of the front frame parts 2a,2b seen in fig. 4 the upper front frame part 2a is turned 180° about a central, vertical axis in relation to the lower front frame part 2b, as indicated by double arrow B, whereby the upper elongate flat abutment face 30a of the upper assembling part 14a of the upper front frame part 2a can be arranged in joining securable contact with the lower elongate flat abutment face 30b of the lower assembling part 14b of the lower front frame part 2b.

Any of the respective upper first through-holes 31a,31b,31c,31d of the upper assembling part 14a of the upper front frame part 2a can be used to secure the lower assembling part 14b of the lower front frame part 2b to said upper front frame part 2a, e.g. utilizing any of the upper second through-holes 31a',31b',31c',31d' .

The lower front frame part 2b is secured to the pallet 34 by means of a first set of transport brackets 35a,35b on opposite sides of the carrier frame part 4b.

A respective bottom flange 36a,36b of the respective transport brackets 35a,35b is secured to the pallet 34 by means of screws (not shown), and the respective opposite free end 37a,37b of said transport bracket 35a,35b is secured to one of a plurality of respective connecting bars 38a,38b that connects an upper annular frame 39b and a lower annular frame 40b of the basket-shaped grid structure that constitutes the carrier frame part 4b for the cargo box (not shown) of the lower front frame part 2b. Which connecting bar of the carrier frame 4 that the opposite free end 37a,37b of said transport bracket 35a,35b are or can be connected to is a matter of designing said transport bracket 35a,35b, such as their curvature and height of the transport bracket 35a,35b.

As seen in figs. 4 - 7 two front frame parts 2a,2b can be assembled to assume a transport mode and be arranged next to two similarly arranged and assembled other front frame parts 2c,2d on one single pallet 34.

In the transport mode seen in fig. 4 the opposite lower front frame parts 2b,2d have their respective lower annular frames 40b,40d facing each other and their head tubes 7b,7d axially aligned so that a rod (not shown) can be inserted through said head tubes 7b,7d during storage and transport to provide further structural stability to the assembled framework of four front frame parts.

As the upper front frame parts 2a,2c are turned 180° in relation to the lower front frame part 2b,2d said opposite upper front frame parts 2a,2c instead have their respective upper annular frames 39a,39c facing each other, however their head tubes 7b,7d are also axially aligned so that another rod (not shown) can be inserted during storage and transport to provide even further structural stability to the assembled framework of four front frame parts.

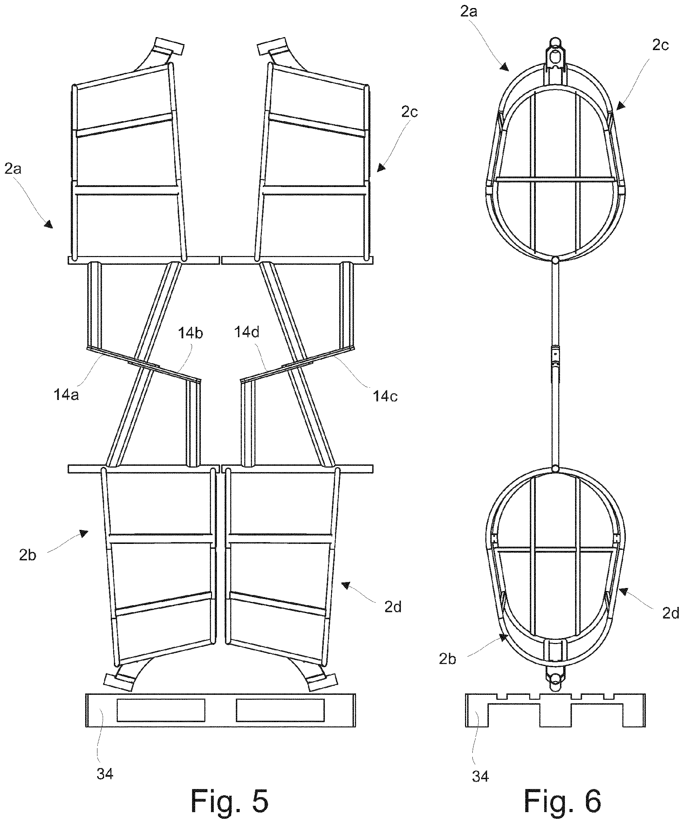

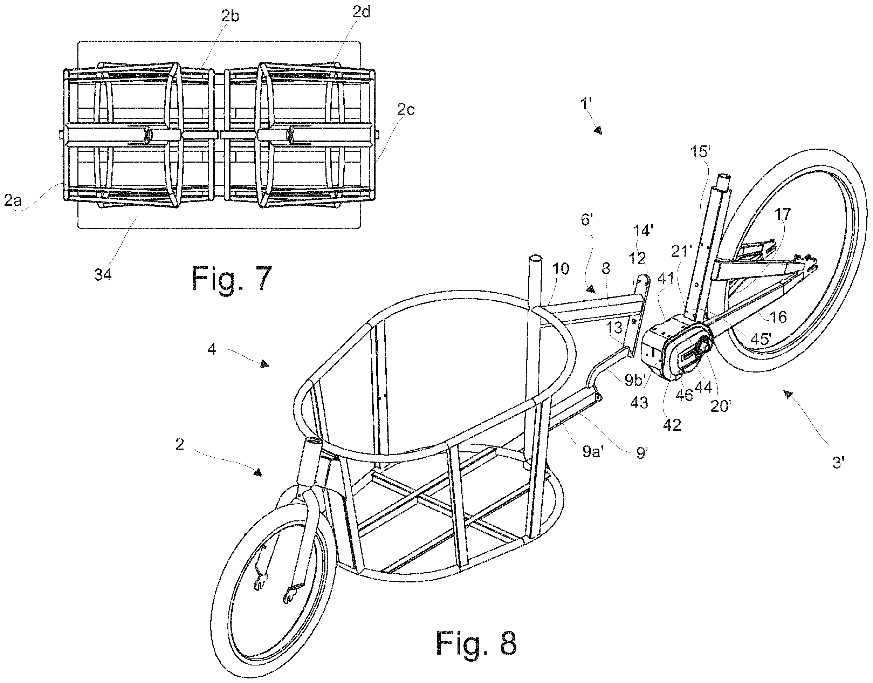

The side views of figs. 5 and 6 and the top view of fig. 7 show that four front frame parts 2a,2b,2c,2d can be accommodated on a single pallet 34 and thereby occupies minimum space.

Fig. 8 shows a second embodiment of a cargo bike frame 1' for use in an electrically powered cargo bike. For corresponding components of the first embodiment of a cargo bike frame 1 same reference numerals are used.

The second embodiment of a cargo bike frame 1' has a modified intermediate frame part 6' and a modified rear frame part 31. The front fork part 5 is welded to the carrier frame part 4.

The rear frame part 3' comprises a seat tube 15' that at its lower end 21' extends into a motor suspension member 41 to which an electric motor 42 and its associated crank-axle bearing 20' are secured. In the present embodiment the motor suspension member 41 is formed as a U-bracket 43 arranged in extension of the opposite chain stays 16,17, and axially protruding there from. The opening 44 to the U-bracket 43 is facing downwards away from the seat tube 15'.

The intermediate frame part 6' has the same top tube 8, but a modified down tube 9' and a modified assembling part 14'. The down tube 9' has a first down tube section 9a' that extends into a curved second down tube section 9b' that is secured to the lower end 45' of the assembling part 14'. The curved second down tube section 9b' is being configured with the similar curvature as the exterior face of the U-bracket 43, so that when the assembling part 14' is secured to the seat tube 15', the U-bracket 43 serves as the male part the receives the U-bracket 43 that constitutes the female part. Thus the U-bracket 43 serves as a convenient seat 46 and backstop for both the assembling part 14' and for the curved second down tube section 9b' thereby structurally enforcing the assembled cargo frame 1'. The assembling part 14 is shorter than the assembling part 14' as the curved second down tube section 9b' is above the first down tube section 9a'.

Previously when a cargo bike frame was made of a front frame part and a rear frame parts that were welded together only one cargo bike frame could be stored and/or transported on an Euro pallet sized 120 x 80 x 13 cm (L x B x H). According to the present invention the demand for storage and/or transport space can be reduced up to about 75% with a corresponding decrease in costs.

The cargo box can be mounted to the carrier frame part during storage and/or transport. Also the drive train can be mounted on the rear frame parts before the rear frame part is assembled to the front frame part. The rear frame part, with or without drive train and associated components, can be stored and accommodated during transport inside the associated carrier frame parts, or inside free spaces in the structural framework assembly seen in figs. 4 - 7 together with other detached parts such as wheels, handlebars, saddle, etc.

The invention is described above in relation to a split-part type cargo bike frame, thus a modular structured cargo bike frame. Emphasize is made that the invention is also applicable for a conventional bicycle or a conventional e-bike. In such applications the front frame part of the split-part type bike frame does not include a carrier frame part.

## Claims

1. A cargo bike frame (1;1') comprising a front frame part (2,2a,2b,2c,2d) and a rear frame part (3;3'), wherein the front frame part (2,2a,2b,2c,2d) comprises a carrier frame part (4) arranged between a front fork part (5) and an intermediate frame part (6;6'), **characterised in that** the intermediate frame part (6;6') and the rear frame part (3;3') are detachable mounted to each other.

2. A cargo bike frame (1;1') according to claim 1, **characterised in that** the rear frame part (3;3') comprises at least
- a seat tube (15;15'),
- opposite chain stays (16,17),
- opposite seat stays (18,19), and
- one or more of a crank-axle bearing (20;20'), a motor suspension member (41) and an electric motor (43) situated at a lower end (21;21') of the seat tube (15;15') at the opposite chain stays (16,17),
- preferably the motor suspension member (41) is a U-bracket (43) arranged in extension of the opposite chain stays (16,17) below the seat tube (15;15').

3. A cargo bike frame (1;1') according to claims 1 or 2, **characterised in that** the intermediate frame part (6;6') comprises
- a head tube (7,7a,7b,7c,7d),
- a top tube (8) directed towards the rear frame part (3; 3') and having a top tube front end (10) and an opposite top tube rear end (12),
- a down tube (9;9') directed towards the rear frame part (3;3') and having a down tube front end (11) and an opposite down tube rear end (13), optionally the down tube (9;9') has a first down tube section (9a') having the down tube front end (11) and an opposite curved second down tube section (9b') having the down tube rear end (13), preferably the curved second down tube section (9b') is arranged closer to the top tube (8) than the first down tube section (9a').
wherein
- the top tube rear end (12) and the opposite down tube rear end (13) are secured to an assembling part (14,14a,14b,14c,14d;14').

4. A cargo bike frame (1;1') according to claim 3, **characterised in that** the assembling part (14,14a,14b,14c,14d;14') is detachably securable to the seat tube (15;15') of the rear frame part (3;3').

5. A cargo bike frame (1;1') according to any of claims 3 or 4, **characterised in that** the assembling part (14,14a,14b,14c,14d;14') has an elongate flat abutment face (30,30a,30b) .

6. A cargo bike frame (1;1') according to any of claims 3, 4 or 5, **characterised in that** the assembling part (14,14a,14b,14c,14d;14') is an elongate plate member.

7. A cargo bike frame (1;1') according to any of the preceding claims 3 - 6, **characterised in that** a means for detachably securing the assembling part (14,14a,14b,14c,14d;14') to the head tube (7,7a,7b,7c,7d) comprises at least
- that the assembling part (14,14a,14b,14c,14d;14') is configured with a first securing means,
- that the seat tube (15;15') is configured with a second securing means alignable with the first securing means, and
- that a third securing means is configured for securing the assembling part (14,14a,14b,14c,14d;14') to the first securing means and the second securing means.

8. A cargo bike frame (1;1') according to claim 7, **characterised in that** that the first securing means is one or more first through-going holes (31,31a,31b,31c,31d) through the assembling part (14,14a,14b,14c,14d;14'), the second securing means is one or more second through-going holes (32,32a,32b,32c,32d) through the seat tube (15;15'), and the third securing means is selected from one or more of bolts, nuts or screws selected to engage into the one or more first through-going holes (31,31a,31b,31c,31d) and the aligned one or more second through-going holes (32,32a,32b,32c,32d).

9. A cargo bike frame (1;1') according to any of the preceding claims 5 - 8, **characterised in that** the seat tube (15;15') has an elongate flat bearing face (15a) facing the elongate flat abutment face (30,30a,30b) of the assembling part (14,14a,14b,14c,14d;14'), optionally at least a central length of the seat tube (15;15') has a square or rectangular cross-section, which central length includes the elongate flat bearing face (15a).

10. A cargo bike frame (1;1') according to claim 9, **characterised in that** the elongate flat bearing face (15a) of the head tube (7,7a,7b,7c,7d) has a protruding seat for resting of a lower end of the assembling part (14,14a,14b,14c,14d;14'), optionally the protruding seat is at least a part of the motor suspension member (41).

11. A cargo bike frame (1;1') according to any of the preceding claims 2 - 10, **characterised in that** one or more of the opposite chain stays (16,17) and the opposite seat stays (18,19) are made of sheet metal and has a bend profile along at least a part of its length.

12. A cargo bike frame (1;1') according to any of the preceding claims 2 - 11, **characterised in that** at least a lengthwise section of at least one of the opposite chain stays (16,17) and opposite seat stays (18,19) has a square C-profile or square U-profile.

13. A cargo bike frame (1;1') according to any of the preceding claims 2 - 12, **characterised in that** a free rear chain stay end (22,23) of a respective chain stay (16,17) converges towards a free rear seat stay end (25,26) of a respective seat stay (18,19), and a free rear chain stay end (22,23) and a free rear seat stay end (25,26) merge into a respective common rear bearing bracket (24,27).

14. A cargo bike frame (1;1') according to any of the preceding claims 3 - 13, **characterised in that** the assembling part (14,14a,14b,14c,14d;14') of a front frame part (2;2a,2b,2c,2d) of a cargo bike frame (1;1') is detachable securable to the assembling part (14;14a,14b,14c,14d;14') of a front frame part (2a,2b,2c,2d) of another cargo bike frame (1;1'), optionally by means of screw(s) and/or bolt(s).

15. A cargo bike comprising the cargo bike frame (1;1') according to any of the preceding claims 1 - 14, preferably the cargo bike is an electric power assisted carrier bicycle or carrier.
